# DEMANDE DE BREVET EUROPEEN

(11) **EP 1 116 614 A2**
(43) Date de publication de la demande: **18.07.2001**
(21) Numéro de dépôt: 01100575.8
(22) Date de dépôt: 10.01.2001
(51) Int. Cl.: B60H 1/00

(54) **Unité de chauffage ou de climatisation d'un véhicule à moteur**

(30) Priorité: 11.01.2000 US 480408
(71) Demandeur: VALEO CLIMATE CONTROL CORPORATION, Auburn Hills, Michigan 48326 (US)
(72) Inventeur: Schwarz, Stefan, Orion Twonship, MI 48360 (US)
(74) Mandataire: Gérard, Michel

(57) **Abrégé**

Une unité de chauffage ou de climatisation latérale (1) a un dispositif de chauffage électrique (40) en aval du noyau thermique (50), espacé de celui-ci et dans l'embouchure du passage chaud. Des portes de mélange (51,61) séparées sont disposées dans chacun des passages chaud et froid.

Le dispositif de chauffage électrique est aligné avec l'ouverture du passage d'air chaud dans la chambre de mélange de manière à empêcher les perturbations de l'écoulement d'air.

## Description

### Domaine de l'invention

La présente invention concerne une unité de chauffage pour un véhicule à moteur, et une unité de climatisation pour un véhicule à moteur.

### Arrière-plan de l'invention

Les unités de chauffage et de climatisation pour véhicules sont très courantes dans la technique. Deux configurations principales sont utilisées, une étant la configuration à empilement centrale et l'autre la configuration latérale. Dans la configuration à empilement centrale, un noyau thermique est approximativement transversal à une conduite d'admission, et dans la configuration latérale, le noyau thermique est approximativement parallèle à l'axe de la conduite d'admission.

De nombreuses unités de ce type ont une conduite d'air d'admission de section transversale relativement grande. La conduite d'air d'admission possède un élément séparateur qui définit deux passages, dont l'un contient un échangeur de chaleur recevant le réfrigérant du moteur et l'autre ne contient pas un tel échangeur de chaleur. Les deux passages se réunissent à nouveau en aval de l'échangeur de chaleur dans un espace de mélange et l'air provenant de l'espace de mélange est distribué dans divers endroits du véhicule. Un ou plusieurs dispositifs de commande de l'écoulement sont associés aux passages, par exemple au point de division de la conduite d'air d'admission, de manière à réguler la proportion d'air s'écoulant à travers l'échangeur de chaleur par comparaison avec l'écoulement d'air allant directement de la conduite d'air d'admission à l'espace de mélange. Les dispositifs de commande de l'écoulement sont habituellement capables de fermer substantiellement les passages d'air de telle sorte que tout l'écoulement d'air dans la conduite d'admission traverse l'échangeur de chaleur ou que tout l'écoulement d'air dans la conduite d'admission traverse le passage allant directement à l'espace de mélange. Des positions intermédiaires permettent une régulation des proportions.

Il est possible d'utiliser un dispositif de commande de l'écoulement du type à porte unique, pivotant autour du point de division de la conduite d'air d'admission, de sorte que la porte puisse être, de manière sélective, en travers du passage d'échange de chaleur, en travers du passage direct ou entre les deux positions. De tels arrangements de type à porte unique peuvent toutefois rendre l'unité de chauffage/de climatisation trop volumineuse et aussi affecter la performance de l'écoulement. Il est possible, en variante, de disposer des portes séparées en travers de chacun des passages ; lorsque ces portes pivotent centralement suivant un agencement en papillon, on peut économiser de la place.

Les unités de puissance modernes ne fournissent pas forcément du réfrigérant qui atteint les hautes températures disponibles auparavant et qui seraient avantageuses pour l'alimentation de l'échangeur de chaleur exposé ci-dessus, et connu ci-après sous le nom de noyau thermique. Un autre problème survient au cours de la période de réchauffement de l'unité de puissance, car pendant ce temps, le réfrigérant peut ne fournir que peu ou pas d'effet de chauffage au noyau thermique.

Il a donc été proposé de fournir en outre un dispositif de chauffage électrique dans l'unité de chauffage, celui-ci étant typiquement un dispositif de chauffage à coefficient de température positif (CTP).

L'inclusion de tels dispositifs de chauffage présente l'inconvénient qu'ils peuvent affecter négativement l'écoulement d'air à travers le noyau thermique, et qu'ils peuvent aussi augmenter substantiellement l'espace occupé par l'unité de chauffage.

### Objectif de l'invention

La présente invention a par conséquent pour objectif de surmonter les difficultés de l'art antérieur.

### Résumé de l'invention

Selon un premier aspect de la présente invention, il est proposé un dispositif de chauffage pour véhicule comprenant une conduite d'admission, et des premier et deuxième passages, lesdits premier et deuxième passages s'étendant latéralement depuis ladite conduite d'admission vers une zone de mélange commune, un noyau thermique, ledit noyau thermique étant disposé dans le premier passage, ledit noyau thermique étant substantiellement disposé latéralement par rapport à ladite conduite d'admission, ledit premier passage ayant une embouchure définie par deux portions de paroi opposées, ladite embouchure débouchant dans la zone de mélange commune, un élément chauffant électrique disposé en travers de ladite embouchure et espacé dudit noyau thermique, une première porte de mélange disposée dans ledit premier passage, et une deuxième porte de mélange disposée dans ledit deuxième passage.

Avantageusement, ledit élément chauffant électrique a une première face disposée à proximité dudit noyau thermique et une deuxième face disposée à l'écart dudit noyau thermique, ladite deuxième face étant substantiellement alignée avec ladite embouchure et un écoulement d'air dans ledit deuxième passage étant substantiellement parallèle à ladite deuxième face.

De manière commode, le dispositif comprend en outre des dispositifs de commande pour déplacer les portes de mélange entre des positions entièrement fermées dans lesquelles chaque porte de mélange ferme son passage respectif et des positions entièrement ouvertes dans lesquelles chaque porte de mélange est substantiellement alignée avec le passage respectif.

De manière commode, chaque porte de mélange comprend deux ailes opposées disposées l'une par rapport à l'autre suivant un angle obtus pour produire l'orientation de l'écoulement d'air lorsque la porte respective est entièrement ouverte.

De préférence, le dispositif comprend en outre un évaporateur, ledit évaporateur étant disposé dans ladite conduite d'admission pour fournir un dispositif de climatisation.

Avantageusement, le dispositif comprend en outre un dispositif de séparation de l'écoulement, disposé dans ladite conduite d'admission, ladite admission se divisant en premier et deuxième passages.

De manière commode, une extrémité dudit dispositif de séparation de l'écoulement forme l'une desdites portions de paroi définissant ladite embouchure.

### Brève description des dessins

Un mode de réalisation préféré de l'invention va maintenant être décrit, à titre d'exemple uniquement, en référence aux dessins d'accompagnement, dans lesquels :
la figure 1 illustre une vue en coupe transversale schématique à travers un dispositif de chauffage ou de climatisation selon l'invention, dans une position entièrement chaude.
La figure 2 illustre une vue similaire à celle de la figure 1 mais avec le dispositif dans la position entièrement froide.

### Description du mode de réalisation préféré

Dans les diverses figures, les numéros de références identiques se réfèrent aux mêmes pièces.

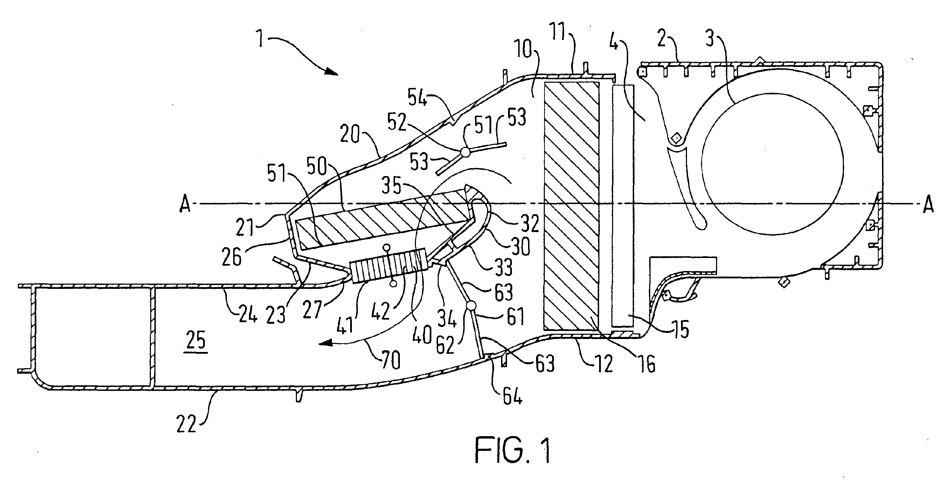

Si l'on se réfère tout d'abord à la figure 1, une unité de climatisation 1 possède une soufflante d'admission 2 du type centrifuge, avec une roue de ventilateur 3 et fournissant une sortie 4. La sortie 4 est en communication avec une embouchure de la conduite d'admission d'air 10, définie en partie par une première portion de paroi 11 et une deuxième portion de paroi opposée 12. Au niveau de l'embouchure de la conduite 10 est disposé un filtre 15 suivi d'un évaporateur 16.

Comme le savent les hommes de l'art, l'évaporateur 16 est alimenté en fluide réfrigérant, grâce auquel l'air en aval de l'évaporateur est refroidi.

Le dispositif décrit ici est une unité de climatisation, d'où l'évaporateur. Les hommes de l'art réaliseront qu'en omettant l'évaporateur, on obtiendrait alors une unité de chauffage/ventilation en raison de l'impossibilité de refroidir.

Les première et deuxième portions de paroi 11, 12 sont, comme illustré dans la figure 1, substantiellement parallèles dans la région de l'embouchure de la conduite d'admission 10. Toutefois, la portion de paroi supérieure 11, telle qu'illustrée dans la figure 1, passe par une courbe de transition dans une région droite 20 qui se rétrécit vers l'intérieur jusqu'à un point 21 substantiellement sur l'axe A de la région de l'embouchure de la conduite d'admission 10. La portion de paroi inférieure 12, telle qu'illustrée dans la figure 1, a aussi une courbe de transition vers le bas, divergeant de l'axe A avant de doucement s'incurver pour revenir à une région droite 22 substantiellement parallèle à l'axe A.

A partir du point 21, la première portion de paroi fait une transition brusque à une portion 26 dirigée généralement à angle droit par rapport à l'axe A avant de revenir brusquement à une portion de retour 23 dirigée vers un bord inférieur, tel qu'illustré, de l'évaporateur 16. A l'extrémité 27 de la portion de retour, la première portion de paroi revient brusquement en arrière sur elle-même en direction d'une région de sortie 24 généralement parallèle à l'axe A.

Une paroi de séparation de l'écoulement 30 est disposée dans la conduite d'admission d'air 10. La paroi de séparation de l'écoulement a une première extrémité 31 qui est légèrement au-dessus de l'axe A et qui définit une forme qui est généralement convexe en direction de l'embouchure de la conduite d'admission d'air 10, en passant d'un point 32 le plus près de l'embouchure et disposé sur l'axe A via une région d'orientation de l'écoulement 33 jusqu'à une deuxième extrémité 34. La deuxième extrémité 34 est espacée de l'extrémité la plus interne 27 de la portion de retour 23 pour définir une embouchure pour le boîtier d'un dispositif de chauffage électrique 40, tel qu'un dispositif de chauffage à CTP. La première extrémité 31 de la paroi de séparation de l'écoulement 30 et le point 21 sur la première portion de paroi 11 définissent un espace recevant un noyau thermique 50. Comme on peut le voir dans la figure 1, le noyau thermique et le dispositif de chauffage électrique sont substantiellement parallèles l'un à l'autre, et espacés. Le dispositif de chauffage électrique est substantiellement symétrique par rapport à l'axe du noyau thermique 50, la portion de retour droite 23 et une paroi interne 35 de la paroi de séparation de l'écoulement 30 définissant un guide d'air en forme d'entonnoir pour l'air qui traverse le noyau thermique jusque dans et à travers le dispositif de chauffage électrique 40.

La région de sortie 24 définit, avec la région droite 22 de la deuxième portion de paroi, une conduite de sortie 25.

Une première porte de type papillon 51 est disposée entre la première extrémité 31 de la paroi de séparation de l'écoulement 30 et la première portion de paroi 12. La première porte-papillon a un pivot central 52 et deux portions d'obturation opposées 53 dimensionnées de telle sorte que lorsque la porte-papillon 51 est dans une première orientation, les portions d'obturation viennent en butée respectivement contre la première extrémité 31 et la première portion de paroi 11. La première portion de paroi a une butée 54 pour la première porte. Les deux portions d'obturation ne sont pas diamétralement opposées mais sont disposées plutôt à un angle d'environ 160° l'une par rapport à l'autre de manière à fournir un effet de guidage de l'air lorsque la première porte-papillon est dans sa position ouverte, telle qu'illustrée dans la figure 1.

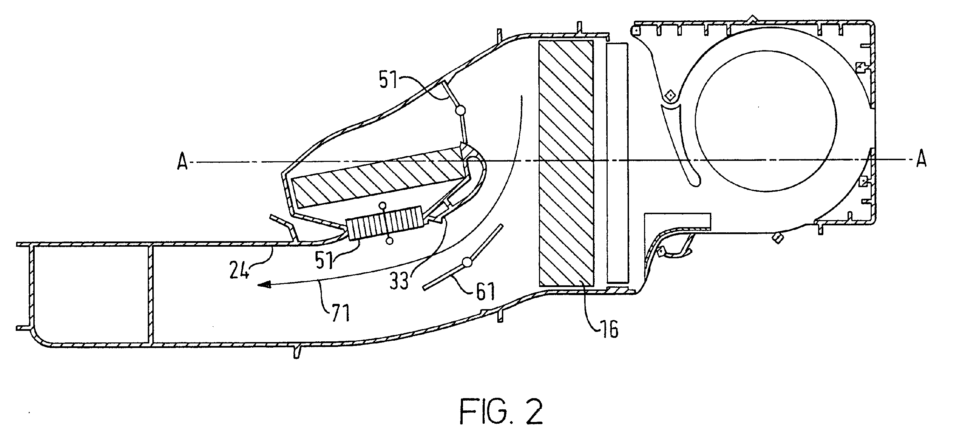

Entre la région d'orientation de l'écoulement 33 de la paroi de séparation de l'écoulement 30 et la deuxième portion de paroi 12 est disposée une deuxième porte papillon 61 ayant un pivot central 62 et deux portions d'obturation opposées 63. Les portions d'obturation 63 sont également disposées à un angle d'environ 160° l'une par rapport à l'autre. La deuxième porte papillon 61, telle qu'illustrée dans la figure 1, a une première orientation dans laquelle elle vient substantiellement en butée hermétiquement contre la paroi de séparation de l'écoulement 30 et la deuxième portion de paroi 12. La deuxième portion de paroi 12 a une butée 64 pour la deuxième porte. Les portes sont associées à des moyens de régulation pour les faire tourner chacune dans le sens horaire de substantiellement 90° jusque dans la position illustrée dans la figure 2. Dans ces positions, on verra que l'angle obtus défini par les deux portions d'obturation 63 de la deuxième porte forme un guide d'écoulement pour l'air, tandis que la première porte 51 est fermée.

Comme les hommes de l'art le comprendront, le dispositif de l'invention est un système latéral, dans lequel le noyau thermique est substantiellement aligné avec l'axe A. Comme illustré dans la figure 1, lorsque la première porte papillon est dans la position entièrement ouverte, un écoulement d'air 70 provenant de l'évaporateur 16 a une trajectoire généralement homogène entre la conduite d'admission 10 et la conduite de sortie 25. Dans la zone de l'élément chauffant, l'air passe de manière homogène dans l'admission du noyau thermique 50, à travers le noyau thermique 50 puis, via la région de transition de l'espace entre le noyau thermique et le dispositif de chauffage électrique parallèle, est concentré dans le dispositif de chauffage électrique avant de sortir dans l'espace de mélange.

Si l'on se réfère maintenant à la figure 2, on verra que la première porte papillon 51 a été tournée d'environ 90° pour venir en butée contre la première portion de paroi 11 et aussi la première extrémité 31 de la paroi de séparation de l'écoulement 30. La deuxième porte papillon est tournée dans la position entièrement ouverte et fournit un écoulement généralement homogène 71 entre la conduite d'admission d'air 10 et la conduite de sortie 25. On verra que la face aval 41 du dispositif de chauffage électrique 40 est disposée de manière à être généralement alignée avec l'embouchure, elle est ainsi co-linéaire avec la région d'orientation de l'écoulement 33 de la paroi de séparation de l'écoulement 30, et la région de sortie 24. Ceci garantit qu'il ne se produit aucune perturbation de l'écoulement de l'air en raison de turbulences supplémentaires et similaires. La présence du dispositif de chauffage électrique 40 empêche l'air froid dans la conduite d'admission d'air de venir en contact avec le noyau thermique 50. De manière spécifique, le noyau thermique 50 fournit un certain nombre de passages généralement parallèles entre ses ailettes 42 et l'espacement entre ces ailettes est petit par comparaison avec l'espacement entre la face aval 41 du dispositif de chauffage électrique et la face aval 51 du noyau thermique 50. Par conséquent, tout effet de turbulence dans l'espacement entre les ailettes n'atteindra pas le noyau thermique, en empêchant ainsi effectivement le prélèvement de chaleur depuis le noyau thermique.

Dans le mode de réalisation particulier illustré, le dispositif de chauffage électrique est disposé parallèlement au noyau thermique. Toutefois, il s'est avéré qu'une déviation de plus ou moins 15 degrés fournissait des bonnes propriétés d'écoulement.

Ce mode de réalisation utilise aussi des portes-papillon, mais d'autres configurations, telles que des obturateurs, des portes-drapeaux, des portes-tambours ou des portes-films peuvent être utilisées.

## Revendications

1. Dispositif de chauffage pour véhicule, comprenant une conduite d'admission, et des premier et deuxième passages, lesdits premier et deuxième passages s'étendant latéralement depuis ladite conduite d'admission jusqu'à une zone de mélange commune, un noyau thermique, ledit noyau thermique étant disposé dans le premier passage, ledit noyau thermique étant substantiellement disposé latéralement par rapport à ladite conduite d'admission, ledit premier passage ayant une embouchure définie par deux portions de paroi opposées, ladite embouchure débouchant dans la zone de mélange commune, un élément chauffant électrique disposé en travers de ladite embouchure et espacé dudit noyau thermique, une première porte de mélange disposée dans ledit premier passage, et une deuxième porte de mélange disposée dans ledit deuxième passage.

2. Dispositif de chauffage pour véhicule selon la revendication 1, dans lequel ledit élément chauffant électrique a une première face disposée à proximité dudit noyau thermique et une deuxième face disposée à l'écart dudit noyau thermique, ladite deuxième face étant substantiellement alignée avec ladite embouchure et un écoulement d'air dans ledit deuxième passage étant substantiellement parallèle à ladite deuxième face.

3. Dispositif de chauffage pour véhicule selon la revendication 1 et comprenant en outre des dispositifs de commande pour déplacer les portes de mélange entre des positions entièrement fermées dans lesquelles chaque porte de mélange ferme son passage respectif et des positions entièrement ouvertes dans lesquelles chaque porte de mélange est substantiellement alignée avec le passage respectif.

4. Dispositif de chauffage pour véhicule selon la revendication 3, dans lequel chaque porte de mélange comprend deux ailes opposées disposées l'une par rapport à l'autre suivant un angle obtus pour produire l'orientation de l'écoulement d'air lorsque la porte respective est entièrement ouverte.

5. Dispositif de chauffage pour véhicule selon la revendication 1, comprenant en outre un évaporateur, ledit évaporateur étant disposé dans ladite conduite d'admission pour fournir un dispositif de climatisation.

6. Dispositif de chauffage pour véhicule selon la revendication 1, comprenant en outre un dispositif de séparation de l'écoulement disposé dans ladite conduite d'admission, ladite admission se divisant en lesdits premier et deuxième passages.

7. Dispositif de chauffage pour véhicule selon la revendication 6, dans lequel une extrémité dudit dispositif de séparation de l'écoulement forme l'une desdites portions de paroi définissant ladite embouchure.

8. Dispositif de chauffage pour véhicule selon la revendication 1, dans lequel ledit élément chauffant électrique est disposé substantiellement parallèlement audit noyau thermique.

9. Dispositif de chauffage pour véhicule selon la revendication 1, dans lequel ladite première porte de mélange peut tourner autour de son pivot central et ladite deuxième porte de mélange peut tourner autour de son pivot central.

10. Dispositif de chauffage pour véhicule selon la revendication 1, dans lequel chaque porte de mélange est un obturateur.

11. Dispositif de chauffage pour véhicule selon la revendication 1, dans lequel chaque porte de mélange est une porte-tambour.

12. Dispositif de chauffage pour véhicule selon la revendication 1, dans lequel chaque porte de mélange est une porte-drapeau.

13. Dispositif de chauffage pour véhicule selon la revendication 1, dans lequel chaque porte de mélange est une porte-film.
